Europäisches Patentamt

European Patent Office

Office européen des brevets

(11) Publication number: 0 473 214 A1

# EUROPEAN PATENT APPLICATION

(21) Application number: 91201976.7

(22) Date of filing: 30.07.91

(51) Int. Cl.5: B60G 17/052, B62D 61/12

(30) Priority: 01.08.90 NL 9001739

(43) Date of publication of application:
04.03.92 Bulletin 92/10

(84) Designated Contracting States:
AT BE CH DE DK ES FR GB GR IT LI LU NL SE

(71) Applicant: WEWELER N.V.
Kayersdijk 149
NL-7332 AP Apeldoorn(NL)

(72) Inventor: Zantinge, Johan Michiel
Methorsterweg 18
NL-6991 TX Rheden(NL)
Inventor: Aalderink, Derk Geert
Zutphenseweg 46a
NL-7245 NV Laren(NL)

(74) Representative: de Bruijn, Leendert C. et al
Nederlandsch Octrooibureau
Scheveningseweg 82 P.O. Box 29720
NL-2502 LS 's-Gravenhage(NL)

(54) Air spring system for a vehicle with lifting means for the vehicle.

(57) In an air spring system for a vehicle (2) with lifting means for an axle (4, 5, 6) and with means for raising the vehicle to place it in a higher position than the normal driving position, particularly for allowing its mounting on railroad bogies (8), there is an auxiliary frame (18), with air bellows (17) between the axle (4, 5, 6) and this frame (18) and with air lifting bellows (25) between this frame (18) and the chassis (26). A lever (23) is hingedly connected to the frame (18) and, with its other end, to a vertical rod (28), which may be a shock absorber, pivoted at its other end to the axle (4, 5, 6).

In this way a simple and light structure is obtained both for air lifting of an axle during road travel and when the vehicle is on a bogie (8) and for raising the vehicle to allow positioning onto and removal from a bogie (8).

fig-4

The invention relates to an air spring system for a vehicle, such as a semi-trailer, with lifting means for an axle, and with means for raising the vehicle to place it in a position higher than the normal driving position, and the invention also relates to a vehicle with such an air spring system.

Such raising of the vehicle is used in the case of combined rail and road transport. The vehicle is in this case raised relative to the normal driving position and is thus moved above a bogie, following which it is lowered onto it. After the vehicle is placed on a bogie near the other end also in the same or in a different way, it can be transported by rail with the wheels for road travel raised, and at the destination it can be lifted from the bogies and placed in the state for road travel, and can continue its way by road. The lowering onto the bogies and lifting from them could also be carried out by vertically displaceable means on the bogies. It is possible in this way to place one vehicle on a bogie and either to lower an adjacent vehicle extending with one end above the same bogie by that end also onto the bogie or to couple it to said first-mentioned vehicle for vertical weight transfer.

If the vehicle is a trailer, the vehicle can be lifted in the same way near both ends relative to the wheels. If the vehicle is a semi-trailer, the vehicle can be lifted on the tractor at a distance from the support and then, before or after lowering the vehicle onto a bogie, the fixed supporting leg of the semi-trailer near the tractor can be lowered and the supporting leg can be lengthened by means of a hydraulic or pneumatic cylinder or by mechanical means, in order to raise the vehicle also near the tractor end and then also to lower it at said end onto a bogie.

A normal air spring system for vehicles which handles the suspension for travel on the road normally has a total vertical stroke of 200 to 250 mm. However, a greater total lift is required for the transfer to such rail transport, for example approximately 430 mm. The vehicle can be placed properly on the bogies in this way.

In known systems the air spring system is changed on all axles relative to normal road vehicles in such a way that the necessary additional lift of the vehicle relative to the road can thereby be achieved. This can be achieved by hydraulic lifting means used only for this purpose or by using extra long (high) air spring bellows. The former solution is complex and expensive and makes the construction much heavier, while long air spring bellows have disadvantages as regards not rolling well and their rubber possibly becoming jammed between cup (piston) and supporting plate, in view of the angle changes occurring.

Systems are known, which are improved with respect thereto by making the axle rest with its suspension underneath against an auxiliary frame, which is normally supported against the chassis, while one or more air lifting bellows, not working during travel, are disposed between said auxiliary frame and the chassis, which bellows when supplied with compressed air lift the auxiliary frame and thereby press said axle downwards and thus lift the vehicle. Such a system can be combined with an axle lifting system (which is known in many embodiments), in order to lift the axles when the vehicle is on a bogie, which axle lifting system can, of course, also be used during travel on the road in a light or unladen state, in order to keep at least one axle with the wheels clear of the road.

The object of the invention is to improve such systems further and in particular to make them suitable for combination with an axle lifting system in a manner which makes the overall design of the air spring and axle lifting system considerably simpler and lighter.

To this end, an air spring system of the type mentioned in the preamble is according to the invention characterized in that said axle rests with its spring suspension underneath against an auxiliary frame which is normally supported underneath against the chassis, while one or more air lifting bellows are fitted between said auxiliary frame and the chassis, which bellows do not act on the wheels of said axle during travel on the road, and which when supplied with compressed air press the auxiliary frame and thus said axle downwards, and thus lift the vehicle, and in that said auxiliary frame is provided with a lever which can pivot relative thereto in a vertical plane, and of which a part is connected to one side of said pivot for vertical common movement with the bottom end of said air lifting bellows which is not supported against the chassis, so that said air lifting bellows act via said lever on the auxiliary frame, while a part of the lever is connected at the other side of said pivot to one end of a vertical articulated rod, which at the other side is connected to the axle in order to lift it when said air lifting bellows make the lever move down at the auxiliary frame side.

The system can in this way be used both to lift the axle after placing on a bogie and to lift the axle during travel on the road, without any complication worthy of mention, and saving on special axle lifting elements and space required for them.

Said vertical articulated rod can have means for effective length changing, such as in a telescoping design, or with a groove at one end, in which one of the pivoted connections engages, so that said pivot points between axle and lever can alter in distance within a maximum distance determined by the rod which is taken up when the lever lifts the axle. Said rod can limit the stroke of the air spring bellows in such a way that when the vehicle is being lifted with a crane, during the process of which the axles hang down beneath it, the rubber of the air lifting bellows maintains such a form that the bellows roll up well free of pressure.

This articulated rod is preferably a shock absorber used for travelling on the road, which in its normal end position of maximum length acts as such an articulated rod, which further simplifies the system.

The auxiliary frame is preferably connected by means of an articulated arm to the chassis at a horizontal distance from the air lifting bellows and in a vertical plane in or near the vertical plane in which bearing arms for the axle are hingedly connected to the chassis.

Locks can easily lock the auxiliary frame in an unlockable manner to the chassis of the vehicle, and easily lock the lever in an unlockable manner against turning to the auxiliary frame or the chassis.

The invention will now be explained in greater detail with reference to an example of an embodiment shown in appended drawings, in which:

Fig. 1 is a side view of a semi-trailer/tractor combination, a bogie and the front end of another semi-trailer which has to be supported by that end on the same bogie;

Fig. 2 is the same side view with semi-trailers placed on the bogie;

Fig. 3 is a side view of a part thereof, namely a system according to the invention in the position for travelling on the road at maximum travel height with a laden vehicle, also showing an intermediate stage in placing of the vehicle on a bogie;

Fig. 4 shows the same side view, but at the maximum raised position of the vehicle for taking it above a bogie;

Fig. 5 shows such a side view with raised axle which can be used both for travelling on the road (on wheels of other axles) and for transportation on the bogies on the railway;

Fig. 6 shows a cross-section and view along the line VI-VI in Fig. 5; and

Fig. 7 shows a top view, partially a cross-section along the line VII-VII in Fig. 5.

A tractor/semi-trailer combination has in the usual manner a tractor 1 and a semi-trailer 2 with longitudinal chassis bars 3 on the bottom side. The semi-trailer has three axles 4, 5 and 6, and near the front end on either side a supporting leg 7, possibly with small steel wheels at the bottom, as usual, said leg in this case being telescopic.

A bogie 8 has bearing means 9, 10 for vehicles. These can be of a design which is known per se for this purpose, for example fitted on a revolving platform 11 on the bogie, and having in the centre a bearing device which is spherical at the top and two supports for a vehicle near each side, possibly on an arm 12 on the revolving platform, all this in such a way that each vehicle is, for example, supported near one end at two points with great transverse distance on a bogie, and is supported by its other end at one point in the centre on such a spherical bearing device. The arm 12 can support the end of a vehicle at some distance from the end, and can also have a train coupling which is not shown, for example on said revolving platform 11. Since this is known in all kinds of designs and does not have any direct connection with the present invention, no further description need be given here.

The axles 4, 5 and 6 are provided with a system according to the invention, of the type to be described below, for additional lifting of the vehicle for placing on the bogie.

This system could, however, also be used on only some of the axles, e.g. on one axle, but then the air spring bellows etc. would have to be made heavier, which could be undesirable in the case of heavily laden vehicles. Use on all axles means that air spring bellows which are the ideal choice for road travel are more readily usable. In any case, each axle has an axle lifting system which for axles which have an air spring system according to the invention can be of a design yet to be described, and which can be of conventional design for axles without such a system.

The invention will first be explained with reference to Figures 3 - 7, which show only one axle set, assuming that the design of the three axles 4, 5 and 6 is the same.

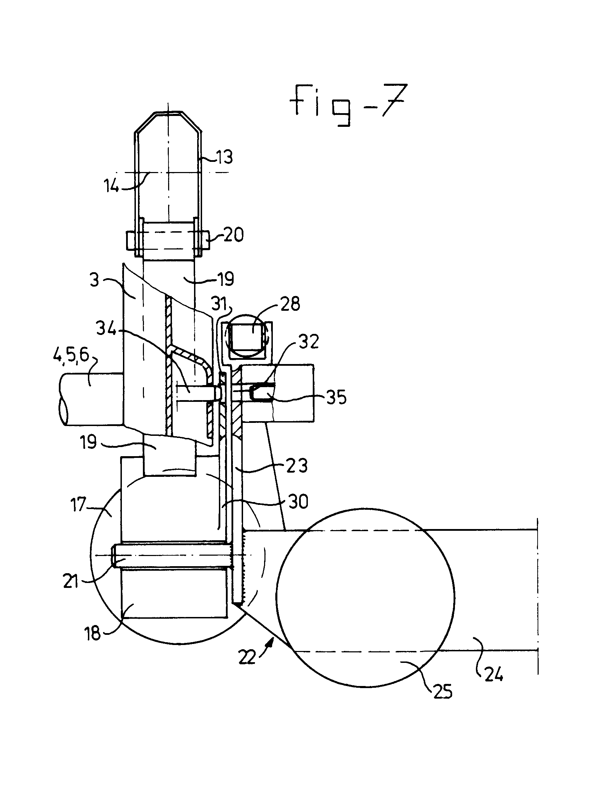

Disposed on conventional spring carrier arms 13 underneath on the chassis bars 3 is a pivot 14 to which a bearing arm 15 is hingedly fixed, which arm can contribute to the desired degree to the suspension in the known manner. These arms bear in the usual manner the axle 4, 5 or 6 and run past them for the formation of a revolving platform 16 bearing an air spring bellows 17. The latter rests at the top end against an auxiliary frame 18 which is fixed to an arm 19 in the form of a leaf spring, which arm is disposed, pivoting about pivot 20, on the spring carrier arms 13, although it can also be connected thereto in point 14. As can be seen in Figs. 6 and 7, said auxiliary frame 18 is in the form of a revolving platform, one at each side of the vehicle, with a central bearing bush in which a pivot pin 21 projecting transversely from a lever element 22 engages. Said element comprises two identical levers 23, one connected near each side of the vehicle by a transverse connecting bridge 24. One or more (in this case two) air lifting bellows 25, which at their top end are fixed to a bridge part 26 in the chassis, rest on said bridge.

In order to ensure that if, for example, there is any appreciable difference in loading between one side of the vehicle and the other, or if there is side wind, the uneven loading of the whole combination of lever element 22 and auxiliary frames 28 is well accommodated without excessive forces in the pivots 20, it is advisable to make the arms 19 in such a way, for example of spring steel, that they can deform sufficiently, including twisting to some extent about their lengthwise direction.

The levers 23 are hingedly connected at their other end at 27 to a shock absorber 28, which at the other side is connected in the usual manner hingedly at 29 to the axle 4, 5 or 6.

Each auxiliary frame 18 has a vertical locking plate 30, extending to the left in Figs. 3 - 5, with a locking aperture 31. Each lever 23 has a locking eye 32 at the top side and a locking eye 33 at the bottom side (seen in cross-section in Fig. 7).

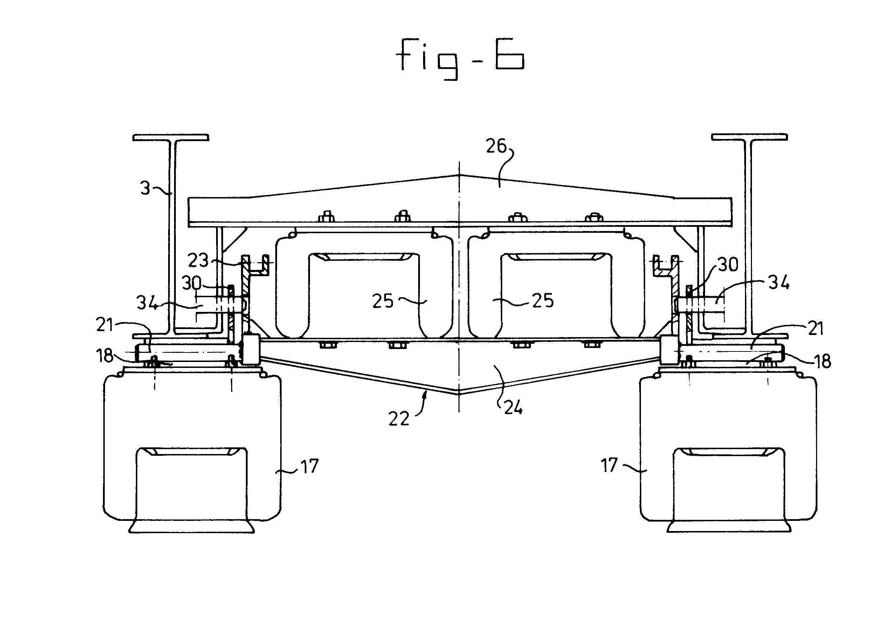

Situated on the chassis on each side is a controllable locking element which can be controlled mechanically or pneumatically and can be of conventional design, so that it is not described in detail here. The locking pin 34 operated by it is shown in Fig. 7. It is also shown in Fig. 6, with partial cross-sections of parts of locking plate 30 and lever 23, although these parts fall outside the plane VI-VI in Fig. 5. This pin 34 can be placed in three positions: a free position, retracted into the chassis (more to the left than in Fig. 7), a first projecting position in which it projects so far (as in Fig. 6 and slightly further than in Fig. 7) that it engages in the aperture 31 of the locking plate 30 of the auxiliary frame 18, and a position projecting further, in which it also engages in the aperture 33 or 32 of the lever 23. In that first projecting position the auxiliary frame 18 is thus locked to the chassis, and in the second projecting position the lever 23 is also locked to it.

The lever 23 bears a locking element with pin 35, which can engage in the auxiliary frame arm 30 from the other side (from the right in Fig. 7) through the apertures 32 in the lever 23 and 31, in order to lock auxiliary frame 18 and lever 23 without locking to the chassis.

This system then works as follows: During road travel the parts are in the position shown in Fig. 3, in which the normal travel position of arm 15 is shown by dashed and dotted line 15'. At maximum driving height in a laden vehicle the parts are in the position shown by the solid line, due to the fact that the pressure in the air spring bellows 17 has increased. The shock absorbers 28 then assume their greatest length under the influence of the air pressure in bellows 17. In the conventional manner, this system as regards air supply is under the influence of a conventional adjustable level regulator.

The pins 34 (Fig. 7) lock the auxiliary frames 18 and the levers 23 to the chassis in the position shown in Fig. 3.

When the semi-trailer 2 has to be deposited onto bogies 8, it is driven onto a loading platform extending along a railway track.

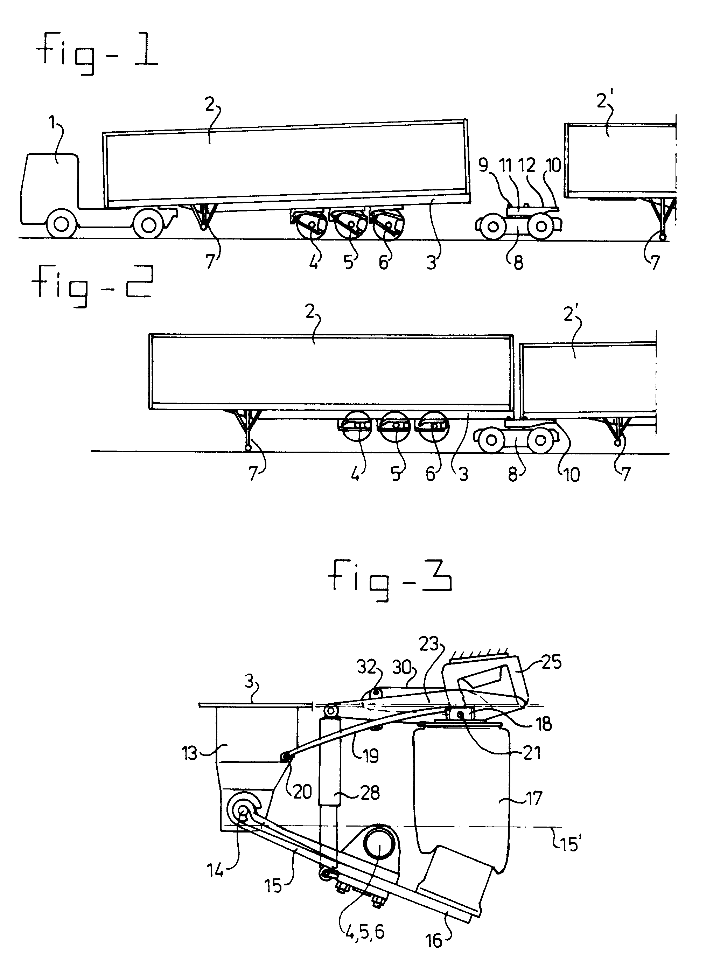

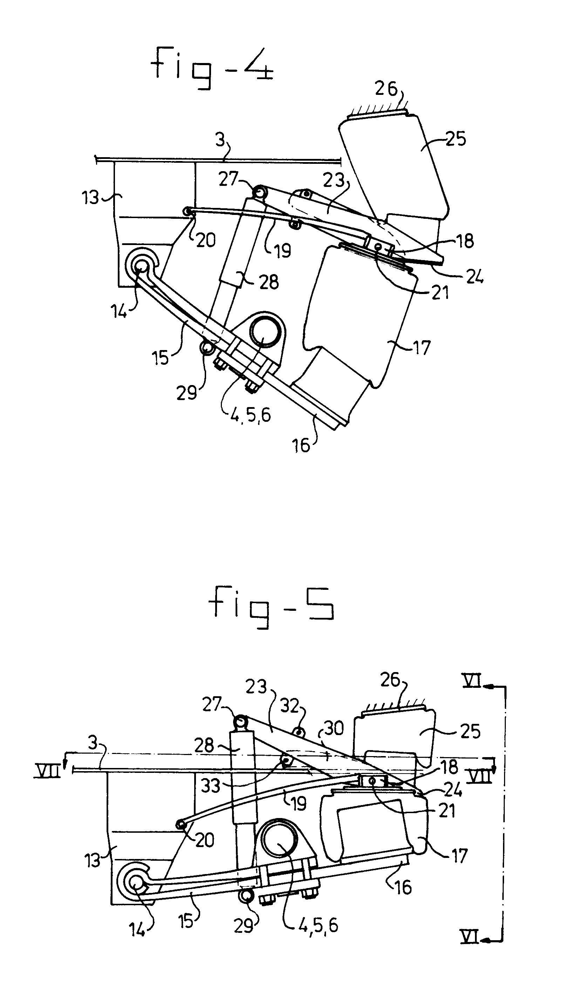

The locking of the auxiliary frames 18 to the chassis by pins 34 is now unlocked, and the auxiliary frames 18 are kept locked by pins 35 to the levers 23 free of the chassis. Air pressure is now supplied to the lifting bellows 25. The vehicle is thereby moved further up until the parts reach the position of Fig. 4, which is also shown in Fig. 1. If the vehicle 2 is still resting on the tractor 1 at the front, it will be able to stand slightly slanting, with a slight difference in height of the vehicle relative to the axles 4, 5 and 6. The vehicle can now be driven in this raised position until it is above the bogie 8, or this bogie can be driven until it is below the vehicle. The air pressure of the bellows 25 can now be released slightly, so that the vehicle drops onto said bogie, following which it can be locked to it in the known manner.

In order now also to place the other end of the semi-trailer 2 on a bogie, at any desired moment after the semi-trailer itself need no longer be displaced horizontally, the semi-trailer 2 is unlocked from the tractor 1 in the support at the king pin and the supporting leg 7 is extended until it takes over the support of the semi-trailer at the tractor end from the tractor, following which the supporting leg 7 is extended further in order to place the semi-trailer high enough at that end to allow a bogie to be placed under the semi-trailer at that end. The supporting leg can have mechanical, hydraulic or pneumatic means for telescopic extension, preferably mechanical devices. The supporting leg 7 must be capable of sufficient extension to permit the movement of a bogie under the vehicle there.

The tractor 1 is now driven away, and a bogie such as 8 is driven under this end of the semi-trailer 2, following which the latter is deposited onto it by shortening of the supporting leg 7, and the supporting leg 7 is then shortened further and/or flapped away to a horizontal position.

In Fig. 2 this is not shown in any further detail for the fully shown semi-trailer 2, but it can be seen for the semi-trailer 2', which in Fig. 1 is ready to be taken by its left end onto bogie 8, assuming that its not shown right end is already supported on a bogie. Figs. 1 and 2 are, of course, not binding as regards the horizontal movements and their sequence. The bogie 8 could be moved from the position of Fig. 1 below semi-trailer 2' first, and the latter could be lowered onto it, the semi-trailer 2 could be driven with the axles in the driving position closer to it (further back) and could first be taken into a position close to said bogie 8 to the lifting position of Fig. 1. Bogie 8 can then no longer be driven to semi-trailer 2 without moving the whole train already formed, so the tractor 1 has to move the semi-trailer 2 until it is in the correct position with its right end above said bogie.

In order to be able to travel safely with the train, the wheels of the axles 4, 5 and 6 must be drawn up as high as possible. For this, from the position of the axles shown in Figs. 1 and 4, the air is evacuated from the air lifting bellows 25. The axles with arms 15 etc. now move from the position shown in Fig. 4 to that shown in Fig. 3. If the bellows 17 are not so overdimensioned that they cause that position of Fig. 3 to be completely reached, then the locking with pins 35 between levers 23 and auxiliary frames 18 can be undone, so that the shock absorbers 28 stand in their position of greatest length against their end limit. In this case the residual air pressure in the spring bellows 17 presses the auxiliary frames 18, with some tilting of the levers 23 in an anticlockwise direction in Figs. 3 and 4, further up until they are against the chassis, in order to be locked to it, so that the auxiliary frames are again in the position shown in Fig. 3, but the levers 23 are still tilted slightly downwards to the left relative to the position of Fig. 3. In order to lift the wheels now, compressed air is again supplied to the lifting bellows 25, with auxiliary frames 18 locked to the chassis (pins 34 in first, not fully projecting position) and spring bellows 17 released. In the process, said lifting bellows press the levers 23 to the position shown in Fig. 5, in which said levers 23 carry the thus lengthened shock absorbers 28 up with them and thus raise the axle to the position shown in Fig. 5.

With locking by pins 34 through the bottom eyes 33 of the levers 23, the latter can now be fixed in this position. The semi-trailer can thus be conveyed safely by rail, with retracted wheels as shown in Fig. 2. It will be clear that an axle lift during road travel for each axle selected for it can be carried out in the same way, thus with one or more of the axles in the position shown in Fig. 5.

For transfer of the vehicle from rail to road again, the levers can be unlocked in the position shown in Fig. 5, and by supplying air to the bellows 17 and 25 and unlocking the auxiliary frame 18 of the chassis and locking the levers 23 with the auxiliary frames in their mutual position as shown in Figs. 3 and 4, the position of the system shown in Figs. 1 and 4 can be achieved again, with the semi-trailer 2 lifted from the bogie 8. The supporting leg 7 can be extended to the position shown in Fig. 2, on the left, the bogies can be removed, and the tractor 1 can be moved below the semi-trailer etc., following which the semi-trailer can be moved into the driving position and driven away.

The compressed air being released from bellows can be collected and used for placing other bellows or the same bellows (partially) under pressure at a later stage.

It is advisable to use roller bellows as the bellows, as shown in the drawing. The bellows 17, whether roller bellows or not, also preferably have a greater effective surface than the lifting bellows 25. During the transfer from the drive position to that of Fig. 4, with equal pressure in said bellows, the spring bellows 17 will then first carry out a certain stroke, so that the effective surface thereof becomes smaller. As soon as it approaches the effective surface of the lifting bellows 25, the latter will make a greater stroke. This allows simplification of the control system as no separate valves are necessary to control the air flow to and from the lifting bellows 25, which have their feed of compressed air in common with the bellows 17.

The system can, of course, be equipped with any desired control system with valves, air pressure tank etc., as is usual.

## Claims

1. Air spring system for a vehicle, such as a semi-trailer, with lifting means for an axle, and with means for raising the vehicle to place it in a position higher than the normal driving position, **characterised in that** said axle rests with its spring suspension underneath against an auxiliary frame which is normally supported underneath against the chassis, while one or more air lifting bellows are fitted between said auxiliary frame and the chassis, which bellows do not act on the wheels of said axle during travel on the road, and which when supplied with compressed air press the auxiliary frame and thus said axle downwards, and thus lift the vehicle, and in that said auxiliary frame is provided with a lever which can pivot relative thereto in a vertical plane, and of which a part is connected to one side of said pivot for vertical common movement with the bottom end of said air lifting bellows which is not supported against the chassis, so that said air lifting bellows act via said lever on the auxiliary frame, while a part of the lever is connected at the other side of said pivot to one end of a vertical articulated rod, which at the other end is connected to the axle in order to lift it when said air lifting bellows make the lever move down at the auxiliary frame side.

2. System according to Claim 1, in which said vertical articulated rod is a shock absorber.

3. System according to Claim 1 or 2, in which the auxiliary frame is connected by means of articulated arms to the chassis at a horizontal distance from the air lifting bellows and in a vertical plane in or near the vertical plane in which bearing arms for the axle are hingedly connected to the chassis.

4. System according to Claim 3, in which said articulated arms can deform resiliently, including twisting to some extent about their lengthwise direction.

5. System according to any of the preceding claims, with easily unlockable locking means for locking the auxiliary frame to the chassis of the vehicle and for locking the lever on the auxiliary frame to prevent it from turning on the chassis.

6. System according to any of the preceding claims, in which air bellows form the spring suspension for road travel between the axle and the auxiliary frame, said air bellows having a greater effective surface than said air lifting bellows between the auxiliary frame and the chassis so that, upon extension of said spring suspension bellows their effective surface decreasing with such extension at least approaches the effective surface of the air lifting bellows.

7. Vehicle, provided with an air spring system according to any of the preceding claims.

fig-1

fig-2

fig-3

# fig-4

# fig-5

Fig-6

fig-7

European
Patent Office

EUROPEAN SEARCH
REPORT

Application Number

EP 91 20 1976

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-2 930 155 (LANGENDORF) <br> * Page 8, line 1 - page 9, line 16; figures 1-3 * <br> – – – | 1,3,7 | B 60 G 17/052 <br> B 62 D 61/12 |
| A | EP-A-0 330 776 (KLEYSEN) <br> * Column 3, line 30 - column 4, line 34; figures 3-11 * <br> – – – | 1,5 | |
| A | DE-A-2 832 393 (UNTERHOLZNER) <br> * Page 9, line 13 - page 10, line 14; figures 1,2 * <br> – – – | 1 | |
| A | US-A-3 794 344 (RAIDEL) <br> * Column 6, lines 11-28; figures 7,8,10 * <br> – – – | 1,4 | |
| A | US-A-4 165 884 (ALLISON) <br> * Figures 1,4 * <br> – – – | 1 | |
| A | GB-A-2 191 741 (LODGE TRAILERS) <br> – – – – – | | |

| | |
|---|---|
| | TECHNICAL FIELDS SEARCHED (Int. Cl.5) |
| | B 60 G <br> B 62 D <br> B 60 S <br> B 60 F |

The present search report has been drawn up for all claims

| Place of search | Date of completion of search | Examiner |
|---|---|---|
| The Hague | 08 November 91 | TORSIUS A. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

  & : member of the same patent family, corresponding
document